## Europäisches Patentamt
## European Patent Office
## Office européen des brevets

(19)

(11) Veröffentlichungsnummer: **0 315 618**
**A1**

(12) # EUROPÄISCHE PATENTANMELDUNG

(21) Anmeldenummer: 88890266.5

(22) Anmeldetag: 27.10.88

(51) Int. Cl.⁴: **F 42 B 13/02**
**F 42 B 5/16**

(30) Priorität: **04.11.87 AT 2914/87**

(43) Veröffentlichungstag der Anmeldung:
**10.05.89 Patentblatt 89/19**

(84) Benannte Vertragsstaaten:
**AT BE CH DE ES FR GB GR IT LI LU NL SE**

(71) Anmelder: **NORICUM MASCHINENBAU UND HANDEL GESELLSCHAFT M.B.H.**
**Zollamtstrasse 1**
**A-4020 Linz (AT)**

(72) Erfinder: **Auer, Ekkehard, Dipl.-Ing.**
**Gierkeweg 11**
**A-4040 Linz (AT)**

**Lettner, Josef, Dipl.-Ing. Dr.**
**Ried 25**
**A-4312 Ried (AT)**

(74) Vertreter: **Haffner, Thomas M., Dr. et al**
**Patentanwaltskanzlei Dipl.-Ing. Adolf Kretschmer Dr. Thomas M. Haffner Schottengasse 3a**
**A-1014 Wien (AT)**

(54) **Treibsatz.**

(57) Der Treibsatz (1) für eine Einrichtung zur Verringerung des Bodensoges eines Artilleriegeschoßes weist einen zum Gasauslaß (9) offenen Kanal mit einer Innenwand (10) auf, wobei die Innenwand des Treibsatzes sich in Richtung zum Gasauslaß des Treibsatzes konisch erweitert und/oder im Querschnitt gesehen von der Kreisform abweicht. (Fig. 1).

FIG. 1

EP 0 315 618 A1

# Beschreibung

## Treibsatz

Die Erfindung bezieht sich auf einen Treibsatz für eine Einrichtung zur Verringerung des Bodensoges an Artilleriegeschoßen, insbesondere für Gasgeneratoren, welche einen im wesentlichen axialen Gasauslaß umschließen.

Einrichtungen der eingangs genannten Art sind beispielsweise der DE-PS 28 04 270 zu entnehmen. Derartige sogenannte "Base-Bleed"-Gasgeneratoren setzen durch Verbrennung eines Treibmittels Gase frei, welche an der Heckseite des Geschoßes ausgestoßen werden. Die austretenden Gase füllen das beim Flug hinter einem Geschoß entstehende Vakuum, so daß das aerodynamische Vakuum beseitigt wird, welches die Bewegung des Geschoßes bremsen würde. Vergleichbare Vorschläge sind beispielsweise aus der US-PS 4 091 732 zu entnehmen, wobei die unterschiedlichen bekannten Lösungen Variationen in der Richtung des Ausstoßes des erzeugten Gases vorsehen.

Treibsätze für die genannten Gasgeneratoren sind üblicherweise zylinderförmig und weisen einen axialen Verbrennungskanal auf. Die Treibsätze sind in einem Gehäuse bzw. einer Isolationshülle aufgenommen, um eine stufenweise Verbrennung von innen nach außen zu gewährleisten und die Zerstörung des Generators bei zu starker Verbrennung des Treibmittels zu verhindern. Aus mechanischen Gründen muß naturgemäß das Gehäuse eine hinreichende Festigkeit aufweisen, um den Belastungen des Treibsatzes für das Ausbringen des Geschoßes standhalten zu können, andererseits soll durch das den Brennstoffkörper für den Gasgenerator umschließende Gehäuse das Gewicht des Geschoßes nicht nennenswert erhöht werden. Es ist bekannt, die Gehäuse derartiger Gasgeneratoren aus Leichtmetallen, insbesondere Aluminium, auszubilden, wobei diese Gehäuse üblicherweise im wesentlichen topfförmig ausgestaltet sind.

Als Treibsätze bzw. Brennstoffkörper für die Gasgeneratoren kommen übliche Mischungen eines gasabgebenden Mediums mit einem Bindemittel in Frage. Die mechanischen Eigenschaften derartiger Treibsätze bzw. Brennstoffkörper variieren je nach dem gewählten Material und mit Rücksicht auf die hohe Beschleunigung von Geschoßen werden an die mechanischen Werte des Brennstoffkörpers, insbesondere an die Härte, den E-Modul, die Bruchdehnung und die Festigkeit, hohe Forderungen gestellt. Bei diesen bekannten Konstruktionen kann es auf Grund der hohen Anfangsbeschleunigungen und auf Grund der hohen Drücke im Rohr zu unzulässigen Verformungen des Brennstoffkörpers kommen und es besteht eine weitere Schwierigkeit darin, daß der Treibsatz, nachdem das Geschoß das Rohr verlassen hat, auf Grund des plötzlichen Druckabfalles nicht ordnungsgemäß gezündet wird, sondern vielmehr verlöscht. Um ein Verlöschen des Treibsatzes nach Verlassen des Rohres zu verhindern, ist bereits in der DE-OS 35 10 446 vorgeschlagen worden, die den Zündkanal umschließende Innenfläche des Treibsatzes zur Bodensogreduzierung in Heckrichtung sich konisch verengend auszubilden oder aber auch stufenförmig auszubilden, um sicherzustellen, daß die heißen Brenngase des Zünders auch nach dem Verlassen des Rohres den Treibsatz noch sicher entzünden können. Eine derartige Formgebung führt aber besonders mit Rücksicht auf die hohe Beschleunigung des Geschoßes im Rohr zur Gefahr einer unzulässigen Verengung des Gasauslasses, so daß nachfolgend vor allem bei schnellfliegenden Geschoßen nicht die notwendige Gasmenge ausgebracht werden kann, die zur Bodensogreduzierung erforderlich ist. Selbst wenn somit mit einer derartigen Ausbildung die Anzündempfindlichkeit des Treibsatzes verbessert werden kann, besteht auf Grund der gewählten Formgebung die Gefahr, daß die notwendige Gasmenge für die Bodensogreduzierung nicht ausgestoßen werden kann.

Aus der EP-A 219 561 ist bereits eine Ausbildung bekanntgeworden, bei welcher die Innenwand des Gasauslasses bzw. die den Zündkanal begrenzende Wand des Treibsatzes oberflächenvergrößernd aufgerauht ist, oder eine anzündverstärkende Schicht enthält, deren Innenseite oberflächenvergrößernd aufgerauht ist. Derartige oberflächenvergrößernde Aufrauhungen können durch Erhöhung der Porosität oder durch Lamellen gebildet werden, die bei der bekannten Ausbildung von in Umfangsrichtung des Zündkanales verlaufenden Rillen oder Rippen gebildet sind. Mit Rücksicht auf die elastischen Eigenschaften des Treibsatzes und auf den hohen Druck im Rohr hat aber eine derartige Ausbildung zur Folge, daß der Reaktionsdruck des Treibsatzes die oberflächenvergrößernden Maßnahmen zunichte macht und eine vollständige Glättung und im Falle einer porösen Ausgestaltung der Schicht eine hochgradige Kompression der Innenschicht erzielt. Bei entsprechend großen Treibladungen zur Erzielung hoher Geschoßgeschwindigkeiten werden somit die bekannten Maßnahmen zur Vergößerung der Oberfläche des Zündkanales durch die Druckwelle zu nichte gemacht und es wird eine sichere Zündung des Treibsatzes nicht gewährleistet.

Die Erfindung zielt nun darauf ab, einen Treibsatz der eingangs genannten Art zu schaffen, welcher auch bei hohen Beschleunigungen und somit hoher Mündungsgeschwindigkeit des Geschoßes eine sichere Zündung des Treibsatzes und das Ausbringen einer für die hohe Fluggeschwindigkeit notwendigen großen Gasmenge zur Reduzierung des Bodensoges ermöglicht. Zur Lösung dieser Aufgabe besteht der erfindungsgemäße Treibsatz im wesentlichen darin, daß die Innenwand des Gasauslasses im Querschnitt von der Kreisform abweicht und/oder sich zum Gasauslaß des Treibsatzes konisch erweitert. Dadurch, daß die Innenwand des Gasauslasses im Querschnitt von der Kreisform abweicht und somit in axialer Richtung verlaufende Rillen oder Rippen vorgesehen sind, läßt sich auch mit hohen Druckwellen eine Verformung des Kanales zu einem Zylinder nicht ohne weiteres erzielen, sondern es wird auch bei hohen Druckwellen immer eine unregelmäßige und gegenüber einer zylindrischen Mantelform vergrößerte Oberfläche zur Verfügung stehen. Dadurch, daß nun zusätzlich oder alternativ sich die Innenwand des Gasauslasses zum Gasauslaß des Treibsatzes konisch erweitert, wird einer derartigen Einebnung der in im wesentlichen axialer Richtung verlaufenden Erhebungen und Vertiefungen durch die Druckwelle weiter entgegengewirkt und es wird auch bei hohen Beschleunigungen sichergestellt, daß der Gasauslaß nicht durch Verformung des Treibsatzes zu weit verengt wird, so daß nach dem Zünden tatsächlich große Gasmengen ausgebracht werden können. Mit Vorteil ist die Ausbildung hiebei so getroffen, daß die Innenwand des Gasauslasses in Umfangsrichtung mäandierend verläuft, wodurch neben einer großen zündfähigen Oberfläche auch ein hohes Maß an Gasentwicklung in der Zeiteinheit sichergestellt wird.

Gemäß einer bevorzugten Weiterbildung des erfindungsgemäßen Treibsatzes, ist die Ausbildung so getroffen, daß die Innenwand des Gasauslasses sich zum Gasauslaß progressiv erweitert und von gekrümmten oder geknickten Erzeugenden begrenzt ist. Eine derartige trompetenartige bzw. trichterförmige Ausbildung, hat sich als besonders vorteilhaft erwiesen.

Mit Vorteil ist der Treibsatz in Umfangsrichtung in Segmente unterteilt, wobei die Teilungsfugen jeweils in einem in radialer Richtung gemessenen Maximum der wellenlinienförmig verlaufenden Querschnittskontur liegen. Eine derartige Ausbildung hat den Vorteil, daß die Druckwelle der Treibladung, welche die Beschleunigung des Geschoßes im Rohr bewirkt, im Falle einer übermäßigen Verformung des Treibsatzes zur Verringerung des Bodensoges weiter im Sinne einer Vergrößerung der zündfähigen und gasproduzierenden Oberfläche wirkt, da diese Druckwelle auf Grund der Formgebung der wellenförmig verlaufenden Querschnittskontur bevorzugt an den Teilungsfugen zur Wirkung gelangt und dort im Sinne einer Aufweitung der Teilungsfuge wirksam wird. Es wird somit durch die Druckwelle der Treibladung bei einer derartigen Ausbildung keine Verkleinerung der wirksamen Oberflächen sondern vielmehr bevorzugt eine Vergrößerung der wirksamen Oberflächen des Treibsatzes erzeugt.

Als strömungstechnisch besonders günstig, um einem Auslöschen des Treibsatzes nach dem Verlassen des Rohres entgegenzuwirken, hat sich eine Ausbildung erwiesen, bei welcher die Minima und Maxima der wellenlinienförmig verlaufenden Querschnittskontur in Achsrichtung der Innenwand schraubenlinienförmig verlaufen.

Um sicherzustellen, daß die im wesentlichen axial oder schraubenlinienförmig verlaufenden Rillen oder Rippen der Innenwand des Gasauslasses auch bei hohen Drücken im Rohr nicht unzulässig verformt werden, wird mit Vorteil eine entsprechend große Ausbildung dieser Rillen und Rippen gewählt, wofür in besonders vorteilhafter Weise in Umfangsrichtung der Innenwand 3 bis 6 Maxima angeordnet sind.

Die Erfindung wird nachfolgend an Hand eines in der Zeichnung schematisch dargestellten Ausführungsbeispieles näher erläutert. In dieser zeigen Fig.1 einen Heckteil eines Artilleriegeschoßes mit einem "Base-Bleed"-Generator; Fig.2 eine perspektivische Ansicht eines erfindungsgemäßen Treibsatzes; Fig.3 einen Querschnitt durch einen erfindungsgemäßen Treibsatz und Fig.4 einen Querschnitt durch eine abgewandelte Ausbildung eines erfindungsgemäßen Treibsatzes.

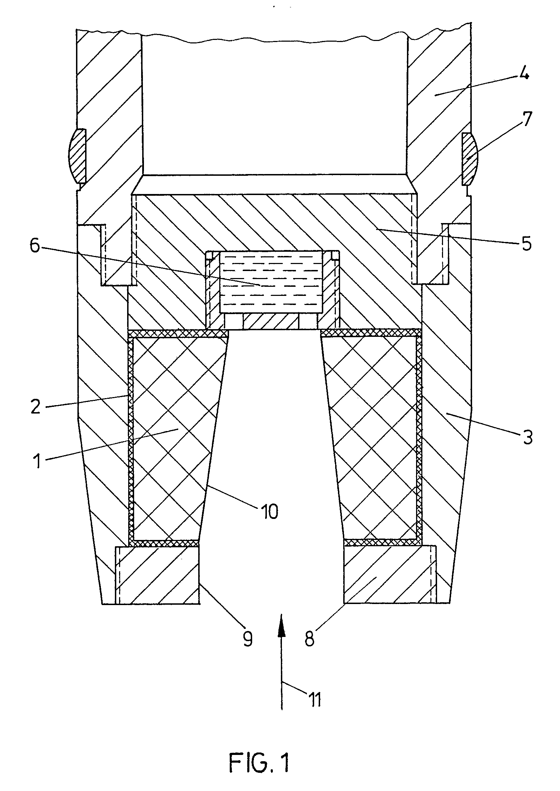

In Fig. 1 ist der Heckteil eines Geschoßes dargestellt, welches einen Gasgenerator enthält. Der Generator besteht hiebei im wesentlichen aus einem Treibsatz 1, welcher in einer isolierenden Hülle 2 enthalten ist. Das Gehäuse wird von einem Topf 3 gebildet, welcher aus Aluminium besteht. Der Topf 3 ist mit dem Grundkörper 4 der Granate verschraubt. In der hinteren Abschlußplatte 5 des Granatkörpers 4 ist ein Zünder 6 aufgenommen, über welchen der Gasgenerator gezündet wird. Am Grundkörper 4 der Granate ist weiters noch ein Führungsband 7 ersichtlich, wie es üblicherweise bei Granatkörpern vorgesehen ist. Das topfförmige Gehäuse 3 des Gasgenerators wird durch eine Abschlußplatte 8 verschlossen, welche Gasauslaßöffnungen 9 aufweist. Der Treibsatz bzw. der Brennstoffkörper 1 weist einen Zündkanal mit einer Innenwand 10 auf, über welche das sich bei Verbrennung des Brennstoffkörpers bildende Gas in die Auslaßöffnung 9 ausgebracht wird.

Die Innenwand 10 des Zündkanales ist bei der Ausbildung nach Fig.1 sich zum Heckteil hin konisch erweiternd ausgebildet, so daß auch hohe Beschleunigungskräfte nicht zu einer unzulässigen Verjüngung des Gasauslasses 9 führen. Mit dieser konischen Erweiterung wird gleichzeitig die gasproduzierende Oberfläche des Treibsatzes 1 erhöht und die zündfähige Oberfläche des Treibsatzes 1 vergrößert.

Das Geschoß wird von den Treibgasen der Treibladung im Rohr im Sinne des Pfeiles 11 beaufschlagt und in Richtung dieses Pfeiles 11 bis zum Verlassen des Rohres beschleunigt.

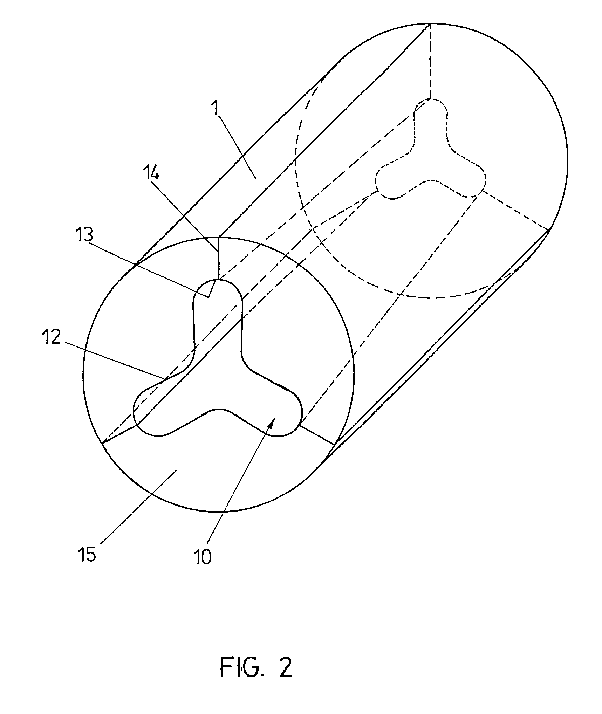

Bei der Ausbildung nach Fig.2 weist die Innenwand 10 des Treibsatzes 1 im Querschnitt gesehen in Umfangsrichtung mäandrierende Kontur 12 auf, wobei die Maxima 13 dieser wellenförmigen Kontur 12 den Teilungsfugen 14 der Segmente des Treibsatzes 1 benachbart liegen. Die Innenwand 10 ist hiebei gleichzeitig zum Hinterende bzw. Heckende 15 divergierend bzw. sich erweiternd ausgebildet, wie dies bereits in Fig.1 angedeutet war.

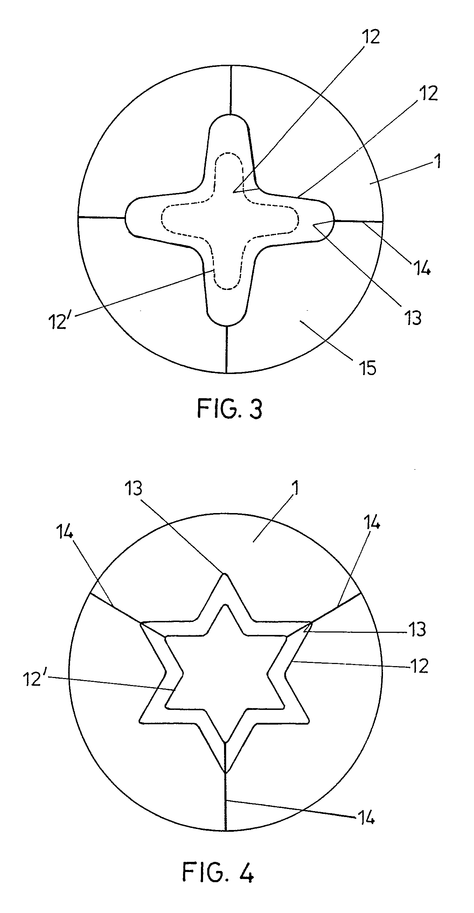

Bei der Darstellung nach Fig.3 weist die mäandrierende Kontur 12 des Querschnittes der Wandung 10 vier Maxima 13 auf, welche wiederum an den Teilungsfugen 14 der Segmente des Treibsatzes 1 liegen. Mit der strichliert angedeuteten weiteren Innenkontur 12' wird die konische Verjüngung, welche ausgehend von der Heckseite 15 nach innen weist, angedeutet.

Bei der Darstellung nach Fig.4 ist an Stelle der mäandrierenden Querschnittskontur 12 gemäß den Fig.2 und 3 ein Polygonzug mit abgerundeten Kanten vorgesehen, wobei auch hier wiederum die Maxima 13 an Teilungsfugen 14 der Segmente 1 anschließen. Die kleinere Innenkontur 12' deutet wiederum die konische Verjüngung in das Innere des Treibsatzes gesehen von der Heckseite aus, an. Bei der Ausbildung nach Fig.4 sind drei Segmente durch Trennungsfugen 14 von einander getrennt dargestellt, und es ist somit innerhalb jedes Segmentes ein weiteres Maximum 13 der mäandrierenden Querschnittskontur vorgesehen. Eine derartige Ausbildung zeichnet sich durch besonders hohe Formstabilität bei hohen Beschleunigungskräften und hoher Druckbelastung aus und bietet gleichzeitig eine besonders große zündfähige Oberfläche, welche auch bei plötzlichem Druckabfall bei Verlassen des Rohres ein Auslöschen des Treibsatzes verhindert.

**Patentansprüche**

1. Treibsatz (1) für eine Einrichtung zur Verringerung des Bodensoges an Artilleriegeschoßen, insbesondere für Gasgeneratoren, welche einen im wesentlichen axialen Gasauslaß (9) umschließen, dadurch gekennzeichnet, daß die Innenwand (10) des Gasauslasses (9) im Querschnitt von der Kreisform abweicht und/oder sich zum Gasauslaß (9) des Treibsatzes (1) konisch erweitert.

2. Treibsatz nach Anspruch 1, dadurch gekennzeichnet, daß die Innenwand des Gasauslasses (9) in Umfangsrichtung mäandrierend verläuft.

3. Treibsatz nach Anspruch 1 oder 2, dadurch gekennzeichnet, daß die Innenwand (10) des Gasauslasses (9) sich zum Gasauslaß progressiv erweitert und von gekrümmten oder geknickten Erzeugenden begrenzt ist.

4. Treibsatz nach Anspruch 1, 2 oder 3, dadurch gekennzeichnet, daß der Treibsatz (1) in Umfangsrichtung in Segmente unterteilt ist und daß die Teilungsfugen (14) jeweils in einem in radialer Richtung gemessenen Maximum (13) der wellenlinienförmig verlaufenden Querschnittskontur (12, 12') liegen.

5. Treibsatz nach einem der Ansprüche I bis 4, dadurch gekennzeichnet, daß die Minima und Maxima (13) der wellenlinienförmig verlaufenden Querschnittskontur (12) in Achsrichtung der Innenwand (10) schraubenlinienförmig verlaufen.

6. Treibsatz nach einem der Ansprüche 1 bis 5, dadurch gekennzeichnet, daß in Umfangsrichtung der Innenwand (10) drei bis sechs Maxima (13) angeordnet sind.

FIG. 1

FIG. 2

FIG. 3

FIG. 4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US-A-3 407 736  (BEUSCHEL) * Spalten 1,2; Spalte 3, Zeilen 1-11; Figuren * | 1-3 | F 42 B  13/02 F 42 B   5/16 |
| Y | | 4,6 | |
| Y | US-A-2 816 418  (LOEDDING) * Figuren 2,5 * | 4 | |
| Y | US-A-3 885 385  (NICASTRO) * Figuren * | 6 | |
| A,D | US-A-4 213 393  (GUNNERS) * Zusammenfassung; Figuren 1,2 * | 1,4 | |
| A | US-A-4 003 313  (PUCHALSKI) * Spalte 1, Zeilen 11-14; Spalte 2, Zeilen 4-18; Figur * | 1 | |
| A | GB-A-1 507.865  (GUNNERS) * Figuren 2,3 * | 4 | |
| A | FR-A-1 445 331  (NITROCHEMIE) * Figur 2b * | 6 | RECHERCHIERTE SACHGEBIETE (Int. Cl.4) |
| A | FR-A-1 345 443  (RHEINMETALL) * Figur 1 * | 6 | F 42 B F 02 K |
| A | US-A-2 920 443  (HIGGINSON) | | |

Der vorliegende Recherchenbericht wurde für alle Patentansprüche erstellt

| Recherchenort | Abschlußdatum der Recherche | Prüfer |
|---|---|---|
| DEN HAAG | 02-02-1989 | RODOLAUSSE P.E.C.C. |